# EUROPEAN PATENT APPLICATION

(11) **EP 0 722 114 A2**
(43) Date of publication of application: **17.07.1996**
(21) Application number: 95119698.9
(22) Date of filing: 14.12.1995
(51) Int. Cl.: G03B 27/32

(54) **Printer with support shoe and exit media guide member**

(30) Priority: 11.01.1995 US 371347
(71) Applicant: EASTMAN KODAK COMPANY, Rochester, New York 14650 (US)
(72) Inventor: Bridges, Mark Edward, c/o Eastman Kodak Co., Rochester, New York 14650-2201 (US)
(74) Representative: Reichert, Werner F., Dr. rer.nat., Dipl.-Phys.

(57) **Abstract**

A printer having a writer section for imaging a media web, a cutter (10) for selectively trimming the web from the writer section into imaged sheets and waste, and a transport assembly for advancing cut sheets from the cutter to a finishing mechanism, includes a diverter (16) having a deflecting position for directing web material trimmed from the media web to a first area and a web-advance position for directing imaged sheets to the finishing mechanism. The deflecting position may be a waste-deflecting position for directing waste trimmed from the media web to a waste container (18). Preferably, the diverter has a withdrawn position which clears a path for the formation of a slack loop of media between the printer section and the transport assembly, thereby negating speed-matching and web tracking problems between the printer section and the transport assembly. A transport assembly (20) advances media from a writer section to the finishing mechanism at a rate less than the feed rate of the finishing mechanism. Transport assembly rate is over-ridden to allow media to be drawn through the transport assembly at the feed rate of the finishing mechanism. The finishing mechanism may be a chemical processor or a storage cassette.

## Description

### BACKGROUND OF THE INVENTION

### Technical Field

The present invention relates generally to photographic printers utilizing digitized signals, and more particularly to photographic printers that expose media and automatically forward exposed media sheets to a processor for developing a latent image thereon.

### Background Art

Photographic printing of digitized images is accomplished by modulating the intensity of a light beam that forms a writing spot on photosensitive media as the beam moves relative to the photosensitive media. One type of printer uses an array of light emitting diodes (LED's) positioned on a rotor which spins within a media support cylinder. High speed printers are capable of producing full color images on conventional photographic paper using digitized information, a plurality of individually addressable mono-color LED's arranged in columns and rows to emit a plurality of light beams, projection optics, and support electronics. The write head assembly is resident on a rotor which is simultaneously rotated about a fixed axis and linearly translated past stationary photosensitive recording media mounted on the inner surface of a cylindrical "support shoe" to form a plurality of writing spots moving across the photosensitive material in a fast scan direction and in a slow scan direction.

### DISCLOSURE OF THE INVENTION

According to the present invention, a printer having a writer section for imaging a media web, a cutter for selectively trimming the web from the writer section into imaged sheets and waste, and a transport assembly for advancing cut sheets from the cutter to a finishing mechanism, includes a diverter having a deflecting position for directing web material trimmed from the media web to a first area and a web-advance position for directing imaged sheets to the finishing mechanism. The deflecting position may be a waste-deflecting position for directing waste trimmed from the media web to a waste container. Preferably, the diverter has a withdrawn position which clears a path for the formation of a slack loop of media between the printer section and the transport assembly, thereby negating speed-matching and web tracking problems between the printer section and the transport assembly.

According to another feature of the present invention, a transport assembly advances media from a writer section to the finishing mechanism at a rate less than the feed rate of the finishing mechanism. Transport assembly rate is over-ridden to allow media to be drawn through the transport assembly at the feed rate of the finishing mechanism. The finishing mechanism may be a chemical processor or a storage cassette.

The invention, and its objects and advantages, will become more apparent in the below description of the preferred embodiments.

### BRIEF DESCRIPTION OF THE DRAWINGS

In the detailed description of the preferred embodiments of the invention presented below, reference is made to the accompanying drawings, in which:
Figure 1 a perspective view of a rotary printing system according to the prior art;
Figure 2 shows a general schematic illustration of apparatus according to a first preferred embodiment of the present invention;
Figure 3 is an exploded detail view of a portion of the apparatus of Figure 2;
Figures 4-6 are general schematic illustrations of apparatus according to a second preferred embodiment of the present invention; and
Figure 7 is a detailed view of a portion of the embodiment of the present invention shown in Figures 4-6.

### BEST MODES FOR CARRYING OUT THE INVENTION

The present description will be directed in particular to elements forming part of, or cooperating more directly with, apparatus in accordance with the present invention. It is to be understood that elements not specifically shown or described may take various forms well known to those skilled in the art.

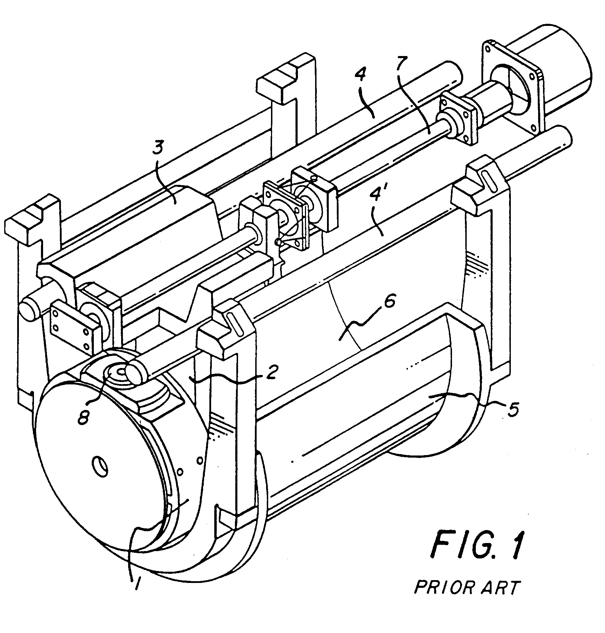

A prior art rotary printing system employing a multi-position lens assembly is illustrated in Figure 1, and includes a rotor 1 coupled to a drive motor, not shown, supported by a rotor support member 2 which hangs from a carriage assembly 3 which is supported for movement along a pair of guide rods 4 and 4'. The rotor is arranged to spin and move axially within a cylindrical support shoe 5 which is provided with a sheet or web of photosensitive material on the inner surface 6 thereof. Rotor 1 is attached to a linear translation assembly comprising rotor support member 2, carriage assembly 3, and a lead screw 7 driven by a stepper motor. The rotor is simultaneously rotated by the drive motor in a fast scan direction and is translated past the cylindrical support shoe in the slow scan direction (axially) by the stepper motor and lead screw 7, thereby achieving a raster scan pattern on the photosensitive media held within the support shoe.

An LED printhead assembly 8 is mounted in rotor 1 and comprises a plurality of mono-color light sources such as an array of LED's and a projection lens assembly. The printhead assembly is located within the body of rotor 1 with the LED array package positioned so that the LED aperture output surface is located in a plane which is perpendicular to the optical axis of the projection lens assembly. The projection lens assembly is arranged to simultaneously image (focus) all of the LED's in the array onto a surface located in close proximity above the outer surface of the rotor, and more particularly, onto the inner surface of the photosensitive material held by support shoe 5.

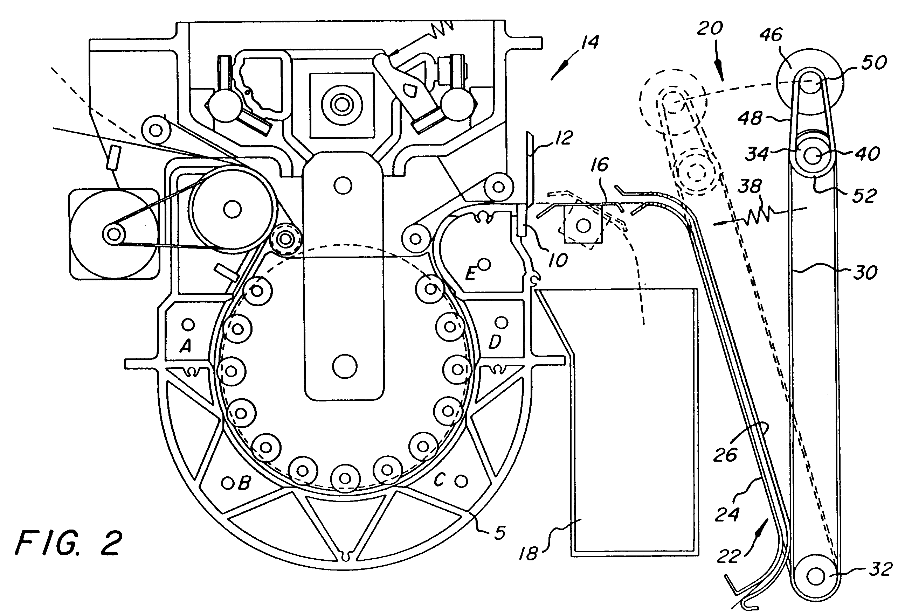

Referring now to Figure 2, media exits through a knife means 10, 12 from a rotary printer assembly 14, which is partially illustrated in the drawing.

Printer assembly 14 is caused to feed the media leader past knife cutting edge 10 to a diverter 16. As the media exits through the knife means, it is directed by diverter 16 either to a waste container 18 or to the entry of a media transport assembly 20.

Because the leader of the media has been exposed during the printer-loading process as described in the above-mentioned U.S. patent application to Bridges, the exposed leader must be removed prior to initiating a print cycle. By rotating diverter 16 to the position shown by the broken lines in Figure 2, the media is deflected towards waste container 18.

Media is held to shoe 5 by vacuum means and knife means 10, 12 then severs a small sheet of the media, which sheet falls into waste container 18. Vacuum is released and another predetermined length of the media is then driven from the printer assembly, followed by another operation of the vacuum and knife means. This process repeats until all that portion of the media which was exposed during the loading operation is in waste container 18.

When all exposed leader media is parted from the web of media, the unexposed end of the media web is drawn back into printer assembly 14, wherein imaging of the media progresses. Diverter 16 is pivoted to the position shown by the solid lines in Figure 2.

After an exposure has been made, the imaged leading edge of the media is driven across the top of diverter 16 and enters a space gate at entrance to media transport assembly 20. When the leading portion of the media has been driven into the space gate an appropriate distance, the exposed portion is cut with knife means 10, 12. The cut sheet is driven down transport assembly 20 to a film processor, not shown, and the process is repeated for the next exposure.

Preferably, the image is over-written to assure that the image fills the exposable surface of the media. That is, small portions of adjacent images overlap. Thus, after an image has been severed by the knife means, the media is advanced a small distance corresponding to the over-written portion plus a minimal buffer amount to provide an unexposed edge for the ensuing print. The over-write portion is severed from the web of media by knife means 10, 12. The severed unexposed edge is small enough to fit between knife means and diverter 16, so diverter 16 need not be actuated for the over-written portion to fall into waste container 18. The free end of the media is again withdrawn onto printer assembly 14, and the ensuing exposure is made.

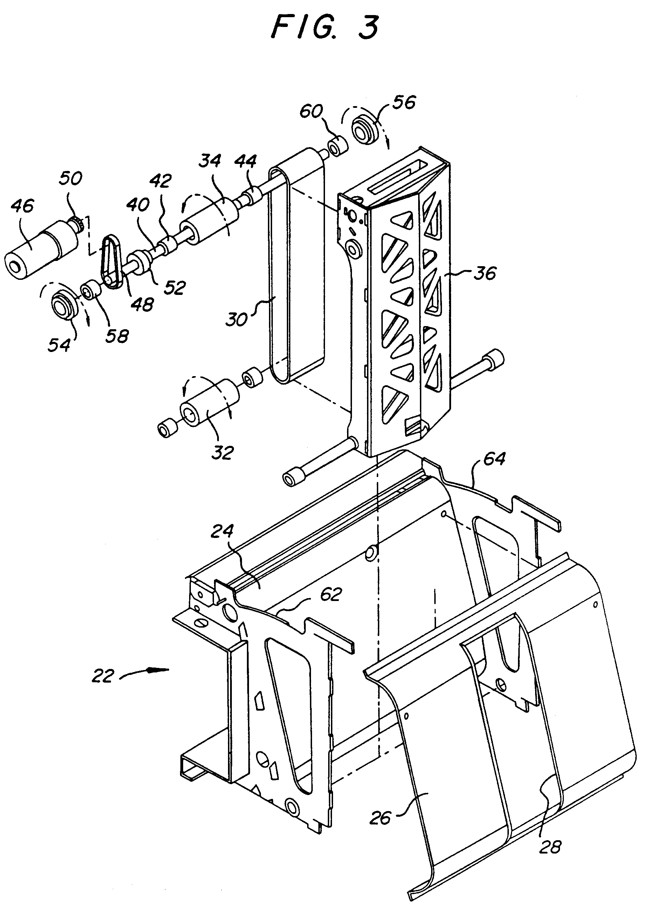

Figure 3 is an exploded detail view of media transport assembly 20. The major elements of the assembly include a paper guide 22 formed by a lower plate 24 fixed relative to the support shoe and an upper plate 26. Upper plate 26 has a cutout 28 to provide access to the interior of paper guide 22. The top of the paper guide is open to diverter 16 (Figure 2), while the lower end leads to a photographic chemical processor, not shown, or other appropriate finishing mechanism such as a storage cassette.

An endless drive belt 30 is trained about a pair of rollers 32 and 34 journalled in a bracket 36. The bracket is pivotally mounted at its lower end for movement from a first position shown in Figure 2 in solid lines to a second, phantom line, position whereat belt 30 enters cutout 28 to engage a sheet of media within paper guide 22. Bracket 36 is urged toward its second position by a spring 38.

Upper roller 34 is coupled to a shaft 40 through a pair of one-way clutches 42, 44 which permit roller 34 to turn only in a counter clockwise direction as illustrated in Figure 2. Shaft 40 is rotatable supported in bracket 36, and is driven in either direction by a bi-directional gear motor 46 via a timing belt 48 and pulley pair 50 and 52, pulley 52 being fixed to shaft 40. Each end of shaft 40 carries a gear 54 and 56 coupled to the shaft by respective one-way clutches 58 and 60, which permit shaft rotation only in a clockwise direction as illustrated in Figure 2. Gears 54 and 56 mesh with a pair of gear segments 62 and 64, respectively, which gear segments are integral with the frame of paper guide 22.

In operation, the leading edge of the web enters paper guide 22 while media transport assembly 20 is in its first, solid line position as illustrated in Figures 2 and 3. After knife means 10, 12 cuts a sheet from the web, gear motor 46 is activated in a counter clockwise direction. This drives shaft 40 in a counter clockwise direction, which causes clutches 42 and 44 in belt roller 34 to lock, thereby driving belt 30 also in a counter clockwise direction. Clutches 58, 60 slip, allowing gears 54 and 56 to turn on gear segments 62 and 64 so that media transport bracket 36 pivots toward lower plate 24 urged by spring 38. Belt 30 enters cutout 28 to engage the end of the media sheet.

During movement of the transport assembly, endless belt 30 is driven in a counter clockwise direction (as oriented in the drawings) by pulley 50, belt 48, and clutches 42 and 44. When belt 30 engages the cut sheet, shaft 40 begins slipping in clutches 58 and 60. Belt 30 continues to move, driving the sheet downwardly, out of the lower end of paper guide 22. If the sheet is being advanced to a processor with a defined throughput rate, it is desirable to drive belt 30 at a rate slightly less than the feed rate of the processor, and to allow for slippage of the belt drive mechanism so that the processor mechanism can draw the sheet at its feed rate. In the embodiment of Figures 2 and 3, such slippage of the belt drive mechanism is provided by slippage of clutches 42 and 44, permitting media being drawn into the processor to turn belt 30 and, thereby, roller 34 faster than shaft 40 turns.

After the sheet has exited the paper guide, gear motor 46 is reversed. Clutches 42 and 44 begin slipping, which stops belt 30. Clutches 58 and 60 lock, causing gears 54 and 56 to drive against gear segments 62 and 64 to overcome the force of spring 38 and drive bracket 36 to is first position. The gearbox ratio on gear motor 46 is such that it prevents spring 38 from driving bracket 36 toward its second, phantom line position when the gear motor is deenergized.

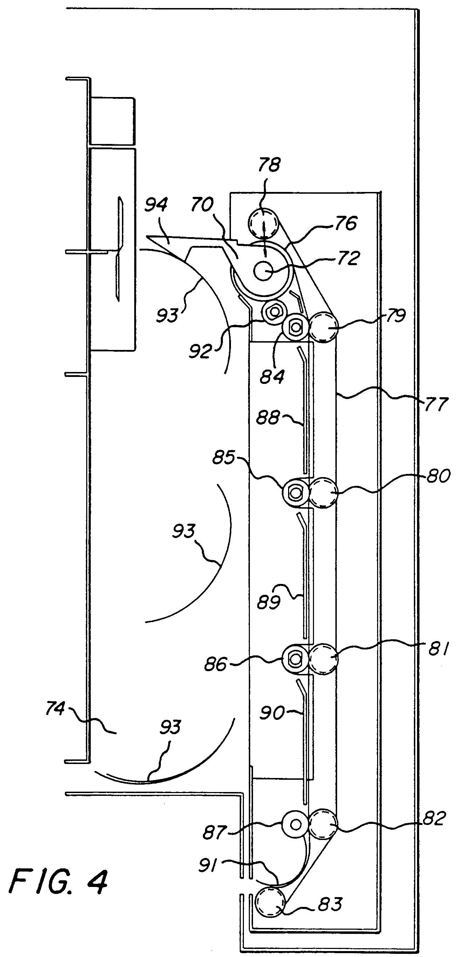

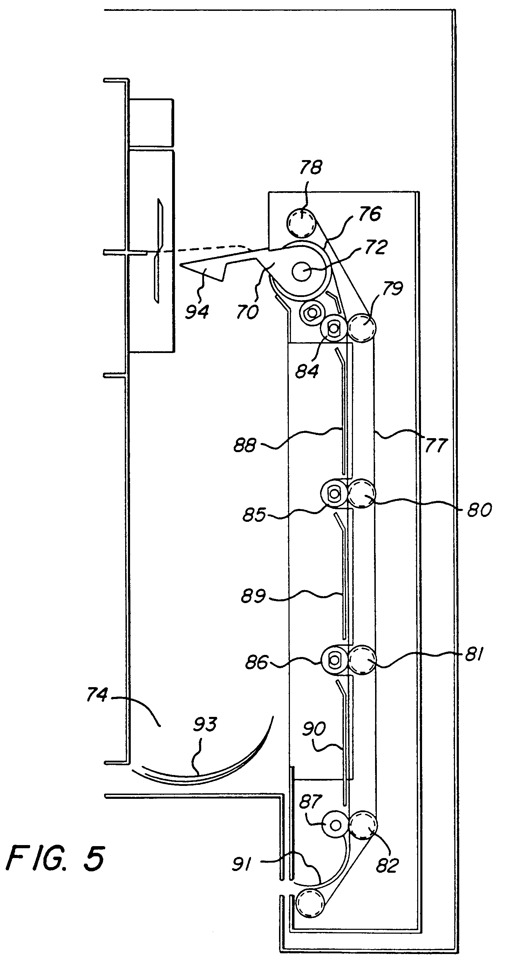

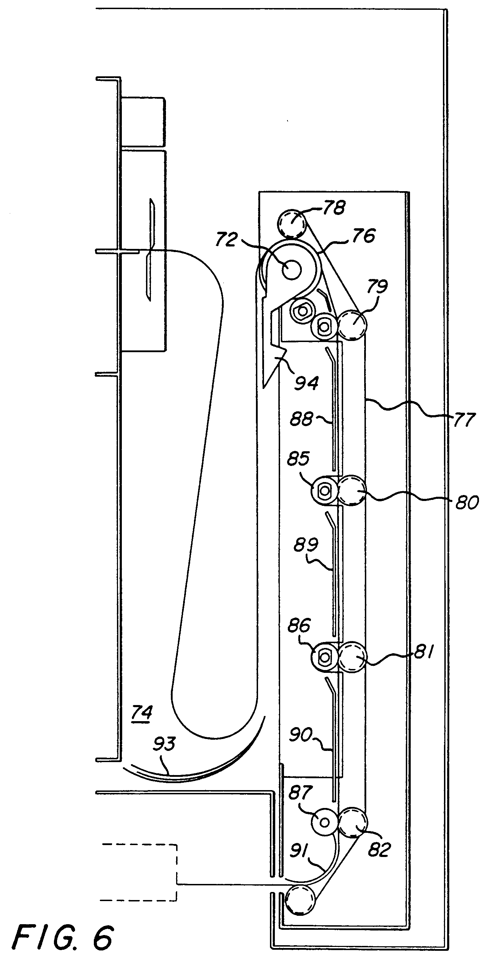

Figures 4-6 depict a general schematic illustration of apparatus according to a second preferred embodiment of the present invention. A diverter 70 is pivotally mounted at 72 for controlled movement between a position shown in Figure 4 for deflecting waste to a waste area 74, a web-advance position shown in Figure 5 for guiding the leading edge of media web to the nip of a large roller 76 and a pressure roller 78, and finally to a withdrawn position shown in Figure 6.

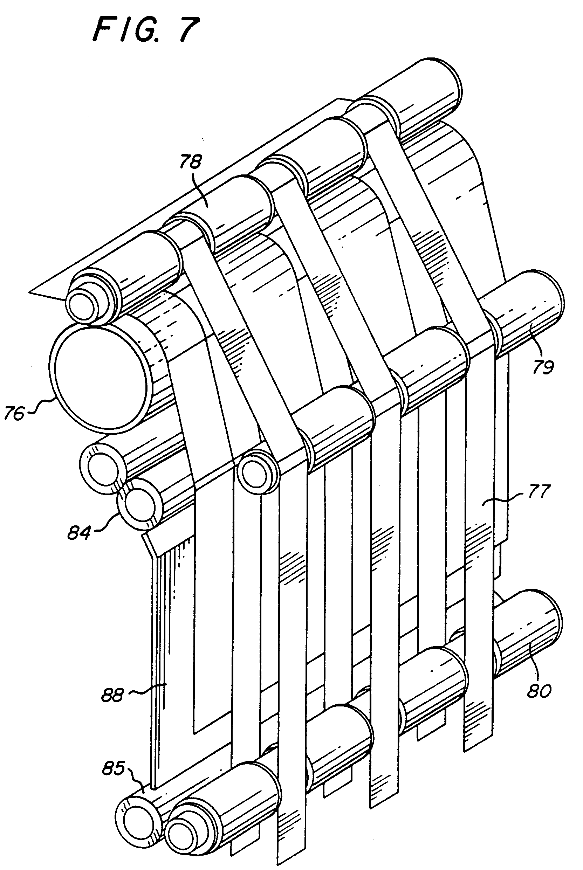

A plurality of endless belts 77 are trained about a series of rollers 78-83, best seen in Figure 7. Each roller 78-83 comprises an axially aligned series of roller segments, several of which are of smaller diameter to accept belts 77. Preferable, these rollers are rotatably, but not drivenly, supported. Pressure roller 78 is mounted for movement toward and away from large roller 76 to close and open the nip formed by the two rollers. A cam (not shown) associated with diverter 70 and a cam follower (not shown) associated with pressure roller 78 are arranged to cooperate to move the pressure roller 78 away from roller 76 upon movement of the diverter to its Figures 4 and 5 positions.

Large roller 76 is driven from a media drive roller 84 by an idler roller 92. Rollers 84 and 92 are the same diameter to insure that the surface speed of large roller 76 matches the surface speed of roller 84.

A set of media drive rollers 84-87 oppose rollers 79-82, respectively, and the roller pairs are spring loaded toward each other to create a nip pressure. Rollers 76, 84-87, and 92 are all rotated at the same rate which is slightly slower than the feed rate of the processor. Clutches, not shown, on the driven rollers allow the sheet to move at the rate of the processor mechanism, which may be faster than the nominal drive speed of the driven rollers, whereby the processor mechanism can draw the sheet through the roller pairs at its feed rate. This can be accomplished also by way of low coefficients of roller friction, etc., as well as by the clutches referred to above.

In operation, diverter 70 assumes the waste deflecting position of Figure 4 as the media web is being trimmed of the leader portion exposed during printer loading operations. Trimmed portions 93 are directed to the waste area 74 by a spur 94.

Now, an exposure is made according to the process described above. After exposure, diverter 70 is moved to its web-advance position of Figure 5, and pressure roller 78 is moved to open the nip formed between it and large roller 76. As the leading edge of the web advances past the knife means, it is guided by the upper (as illustrated) surface of the diverter into the open nip of the roller pair.

The web is stopped, and vacuum is applied to the back of the web in support shoe 5 as described in the above-mentioned, commonly assigned, co-pending U.S. patent application. This removes any web-tracking errors caused during movement of the web from the print position to the nip of rollers 76,78.

Diverter 70 is rotated toward the withdrawn position of Figure 6 to clamp the paper in the roller nip. The web continues to advance past the knife means, and forms a slack loop as shown in Figure 6. When the desired exposed portion of the media has passed the knife, it is trimmed as disclosed above. Not only does the slack loop negate speed-matching problems between the sections of the printer, but it further allows each section of the printer to independently steer the web.

The leading edge of the sheet is guided between roller pairs 84-87 and 79-82 by a series of sheet metal guides 88-90 and belts 77. As the leading edge of the sheet rounds a curved guide member 91, it is directed into a photographic chemical processor, not shown, or other appropriate finishing mechanism such as a storage cassette.

The invention has been described in detail with particular reference to preferred embodiments thereof, but it will be understood that variations and modifications can be effected within the spirit and scope of the invention.

## Claims

1. A printer having a writer section for imaging a media web, a cutter for selectively trimming the web from the writer section into imaged sheets and waste, and a transport assembly for advancing cut sheets from the cutter to a finishing mechanism; said printer further comprising a diverter having a deflecting position for directing web material trimmed from the media web to a first area and a web-advance position for directing imaged sheets to the finishing mechanism.

2. A printer as set forth in Claim 1 wherein said deflecting position is a waste-deflecting position for directing waste trimmed from the media web to a waste container.

3. A printer as set forth in Claim 1 wherein said diverter further has a withdrawn position which clears a path for the formation of a slack loop of media between the printer section and the transport assembly, thereby negating speed-matching problems between the printer section and the transport assembly.

4. A printer as set forth in Claim 1 wherein said diverter further has a withdrawn position which clears a path for the formation of a slack loop of media between the printer section and the transport assembly, thereby negating web tracking problems between the printer section and the transport assembly.

5. A printer comprising:
a writer section for imaging a media web;
a finishing mechanism that receives imaged media at a predetermined feed rate;
a transport assembly for advancing media from the writer section to the finishing mechanism at a rate less than the feed rate of the finishing mechanism; and
means for overriding the transport assembly rate to allow media to be drawn through the transport assembly at the feed rate of the finishing mechanism.

6. A printer as set forth in Claim 5 wherein the finishing mechanism is a chemical processor.

7. A printer as set forth in Claim 5 wherein the finishing mechanism is a storage cassette.

8. A printer as set forth in Claim 5 wherein the transport assembly rate overriding means is a slip clutch in the transport assembly which permits media to be drawn into the finishing mechanism at the predetermined feed rate.

9. A printer as set forth in Claim 5 wherein the transport assembly rate overriding means is a set of media drive rollers in the transport assembly with a low coefficient of friction to thereby permit media to be drawn into the finishing mechanism at the predetermined feed rate.
